# EUROPÄISCHE PATENTSCHRIFT

(11) **EP 2 222 684 B1**
(45) Veröffentlichungstag und Bekanntmachung des Hinweises auf die Patenterteilung: **26.02.2014**
(21) Anmeldenummer: 08868267.9
(22) Anmeldetag: 14.11.2008
(51) Int. Cl.: C07F 3/06

(54) **GRENZFLÄCHENAKTIVE METALLKOMPLEXE ZUR ADSORPTION VON SCHADSTOFFEN SOWIE VERFAHREN ZU IHRER HERSTELLUNG**
SURFACE-ACTIVE METAL COMPLEXES FOR ADSORBING NOXIOUS SUBSTANCES AND METHOD FOR PRODUCING THE SAME
COMPLEXES MÉTALLIQUES TENSIOACTIFS POUR L'ADSORPTION DE SUBSTANCES TOXIQUES ET LEUR PROCÉDÉ DE FABRICATION

(30) Priorität: 21.12.2007 DE 102007062816; 25.02.2008 DE 102008010774
(43) Veröffentlichungstag der Anmeldung: 01.09.2010
(73) Patentinhaber: CAM-D Technologies GmbH, 45139 Essen (DE)
(72) Erfinder: KUHN, Hubert, 42697 Solingen (DE); THIE, Gordon, 45527 Hattingen (DE)
(74) Vertreter: Von Rohr
(86) Internationale Anmeldenummer: PCT/EP2008/009632
(87) Internationale Veröffentlichungsnummer: WO 2009/083070

(56) Entgegenhaltungen:
- EP-A- 0 790 253
- EP-A- 1 213 344
- WO-A-03/102000
- WO-A-2007/122651
- DE-A1- 1 807 090
- US-A1- 2003 004 364
- ZA-A- 9 607 671
- DATABASE CA [Online] CHEMICAL ABSTRACTS SERVICE, COLUMBUS, OHIO, US; TOYAMA, YOSHIYUKI ET AL: "Reactions of methyl ricinoleate and methyl acetylricinoleate with mercuric acetate in hot acetic acid" XP002515787 gefunden im STN Database accession no. 1969:430023 -& FETTE, SEIFEN, ANSTRICHMITTEL , 71(2), 88-92 CODEN: FSASAX; ISSN: 0015-038X, 1969, XP009112523

## Beschreibung

Die vorliegende Erfindung betrifft komplexierte Metallsalze, welche im folgenden auch als Metallkomplexe bezeichnet werden und mindestens einen Liganden sowie mindestens einen Komplexbildner aufweisen, wobei diese komplexierten Metallsalze insbesondere zur chemischen Bindung bzw. Adsorption von Schadstoffen und/oder geruchsbildenden Substanzen geeignet sind, insbesondere wobei die Liganden ein hydrophobes Kohlenstoffgerüst mit hydrophilen Gruppen aufweisen. Das mit dem Komplexbildner gebildete komplexierte Metallsálz ist vorteilhafterweise wasserlöslich und grenzflächenaktiv. Als Komplexbildner werden insbesondere wasserlösliche Säuren oder Salze von mindestens bifunktionellen Säuren oder auch Ethercarbonsäuren eingesetzt.

Gleichermaßen betrifft die vorliegende Erfindung auch die Herstellung dieser komplexierten Metallsalze und deren Verwendung sowie sie enthaltende Zusammensetzungen.

Es ist lange bekannt, daß Zinksalze von Fettsäuren, die auch als Zinkseifen bekannt sind, desodorierende Wirkung haben. Ein bekanntes Beispiel ist das Zinksalz der Rizinolsäure, das Zinkrizinoleat. Diese Zinksalze können Substanzen, wie beispielsweise Stickstoff enthaltende Substanzen, zu denen die Amine zählen, oder Schwefel enthaltende Substanzen, wie Thiole oder Mercaptane, als auch Carbonsäuren, wie die geruchsintensiven Verbindungen Isovaleriansäure oder Buttersäure, chemisch binden und somit olfaktorisch deaktivieren. Daher finden diese Salze vor allem in Kosmetik- und sogenannten Homecare-Produkten Anwendung.

Allerdings sind die Zinksalze der Fettsäuren, wie das Zinkrizinoleat, in Wasser unlöslich, weshalb es bislang notwendig wurde, aufwendige Formulierungen herzustellen, um die Zinksalze in eine wäßrige Lösung oder in fließfähige Konzentrate zu überführen. Beispiele dafür sind Deodorantien. In der Regel basieren diese Formulierungen auf einer Vielzahl von Hilfsstoffen, Zusatzstoffen und/oder Lösungsvermittlern, die gemeinsam als Lösungsvermittler fungieren.

Die GB-PS 1 282 889 beschreibt die Verwendung von Zinksalzen der ungesättigten aliphatischen Hydroxycarbonsäuren mit wenigstens 17 C-Atomen, wie der Rizinolsäure, zur Anwendung als desodorierendes Mittel.

Des weiteren ist aus dem Stand der Technik, wie beispielsweise aus der EP 1 319 394 A1, eine Zubereitung mit desodorierender Wirkung bekannt, welche das Zinksalz der Ricinolsäure, aminofunktionelle Säuren, wie Aminosäuren, Lösungsvermittler, organische und/oder anorganische Säuren und gegebenenfalls Wasser enthält. Als Lösungsvermittler werden Tenside oder Glykole verwendet.

Die EP 1 250 938 A2 offenbart ein wasserlösliches Homecare-Konzentrat mit Zinkricinoleat und einem Alkoxyaminderivat.

Ein in der EP 0 303 212 A2 beschriebenes Deodorant basiert auf hydrolysierten Enaddukten und Diels-Alder-Addukten von Ricinenfettsäuren und Maleinsäureanhydrid, denen noch Triethanolamin und eine organische Säure zugesetzt wird, sowie auf einem Lösungsmittel aus der Gruppe der Alkohole.

In der DE 40 14 055 A1 wird ein Mittel mit desodorierender Wirkung beschrieben, das auf dem Zinksalz der Ricinolsäure und/oder dem Zinksalz der Abietinsäure und/oder weiteren Zinksalzen anderer gesättigter oder ungesättigter hydroxilierter Fettsäuren mit 16 und mehr C-Atomen basiert, in dem des weiteren ein ethoxylierter Fettalkohol und ein tertiäres Amin enthalten sind.

Die US 2003/0004364 A1 betrifft isoretikulare metallorganische Gerüstmaterialien (Isoreticular Metal-Organic Framework bzw. IRMOF), welche im Wesentlichen aus einer Vielzahl von sekundären Baueinheiten (Secondary Building Units bzw. SBUs), die wiederum einen Cluster des Typs M₄O(CO₂)₆ umfassen, und einer Verbindung, welche benachbarte sekundäre Baueinheiten verbindet, bestehen, wobei die verbrückende Verbindung ein lineares ditopisches Carboxylat mit wenigstens einer Phenylgruppe und mindestens einer funktionellen Gruppe, welche an die mindestens eine Phenylgruppe angeknüpft ist, umfasst. Die IRMOFs sollen eine im Wesentlichen dauerhafte Porosität aufweisen und im Wesentlichen stabil sein.

Die WO 03/102000 A1 betrifft ein metallorganisches Gerüstmaterial, welches Poren und mindestens ein Metallion und mindestens eine zweizähnige organische Verbindung, welche koordinativ an das Metallion gebunden ist, aufweist, wobei das Material in Form eines Formkörpers ausgebildet ist. Darüber hinaus kann das Gerüstmaterial zusätzlich noch einen oder mehrere einzähnige Liganden aufweisen.

Die EP 0 790 253 A2 betrifft ein Verfahren zur Herstellung neuartiger metallorganischer mikroporöser Materialien ausgehend von einer Lösung durch Mischen einer Lösung, welche ein oder mehrere Metallionen enthält, mit einem oder mehreren Liganden in Gegenwart eines als Templat eingesetzten Agens.

Die DE 1 807 090 A1 betrifft ein Schmierfett, welches einen überwiegenden Anteil eines Mineralschmieröls mit mindestens 40 Vol.-% aromatischer Kohlenwasserstoffe und einen geringeren Anteil eines Verdickungsmittels enthält, wobei das Schmierfett einen Gehalt von 0,5 bis 10 Gew.-% eines Ethylen/Vinylacetat-Copolymers aufweist.

Die EP 1 213 344 A2 betrifft den Einsatz von Metallsalzen einer unverzweigten oder verzweigten, ungesättigten oder gesättigten, ein- oder mehrfach hydroxylierten Fettsäure mit mindestens acht Kohlenstoffatomen und/oder einer Harzsäure mit Ausnahme der Alkalimetallsalze in Reinigungsmitteln für das maschinelle Geschirrspülen. Bevorzugte Metallsalze sind Metallsalze der Ricinolsäure und/oder der Abietinsäure, vorzugsweise Zinkricinoleat und/oder Zinkabietat. Die Metallsalze sollen primär unerwünschte geruchsbildende Stoffe adsorbieren.

Die ZA 96/07671 A1 betrifft eine sprühbare wässrige Emulsion zur Behandlung der Raumluft und/oder zur direkten Anwendung, wobei die Emulsion einen Emulgator, welcher eine Acrylsäure eines hydrophob modifizierten quervemetzten Polymers umfasst, und eine oder mehrere Verbindungen der folgenden Gruppe umfasst: ein Deodorant, welches einen zweibindigen Metallionenkomplex mit sp³-Hybridisierung und zwei Moleküle, welche jeweils zwei Gruppen, ausgewählt aus Hydroxy-, Carboxy- und Aldehydfunktionen, aufweisen, umfasst; ein Insektizid, welches in Wasser unlöslich oder nur schwach löslich ist; ein bakteriostatisches Mittel, welches in Wasser unlöslich oder nur schwach löslich ist und einen Duft, welcher in Wasser unlöslich oder nur schwach löslich ist.

Die wissenschaftliche Publikation gemäß Toyama, Y. und Takaoka, K. "Reactions of Methyl Ricinoleate and Methyl Acetylricinoleate with Mercuric Acetate in Hot Acetic Acid", Fette Seifen Anstrichmittel, 71 (2), 1969, betrifft Reaktionen von Ricinolsäure- bzw. Acetylricinolsäuremethylester mit Quecksilber(II)-acetat in heißer Essigsäure.

Die WO 2007/122651 A1 betrifft funktionelle Nanomaterialien mit antibakterieller und antiviraler Aktivität. Die Nanomaterialien bestehen aus Metalloxiden, welche mit Kationen von Metallen verbunden sind, welche wiederum antivirale und antibakterielle Aktivität aufweisen. Die funktionellen Nanomaterialien gemäß D8 genügen der allgemeinen Formel AOx-(L-Men+), wobei AOx für das Metall- oder Halbmetalloxid steht mit x gleich 1 oder 2, Me für das Metallion mit antibakterieller Aktivität steht mit n gleich 1 oder 2, und L ein bifunktionales organisches oder metallorganisches Molekül ist, welches gleichzeitig an das Metall- oder Halbmetalloxid und das Metallion binden kann.

Gemäß den flüssigen oder pastösen, geruchsadsorbierenden Formulierungen des Standes der Technik werden eine Vielzahl an Hilfs- und/oder Zusatzstoffen benötigt, um die wasserunlöslichen Zinkseifen in diese Formulierungen zu überführen.

Der vorliegenden Erfindung liegt somit die Aufgabe zugrunde, Metallseifen oder Derivate von Metallseifen, die im folgenden auch als Metallsalze bezeichnet werden, mit der Fähigkeit zur Bindung von Schadstoffen und/oder geruchsbildenden Substanzen bereitzustellen, wobei diese Verbindungen zudem wasserlöslich und/oder grenzflächenaktiv ausgebildet sein sollen.

Ferner soll ein Verfahren zur Herstellung dieser Metallseifen oder Derivate der Metallseifen sowie diese enthaltende Zusammensetzungen, insbesondere wäßrige Zusammensetzungen, zur Verfügung gestellt werden.

Zur Lösung des zuvor geschilderten Problems schlägt die vorliegende Erfindung komplexierte Metallsalze nach Anspruch 1 sowie Herstellungsverfahren hierfür nach Anspruch 3 vor. Weiterer Gegenstand der vorliegenden Erfindung sind zudem Zusammensetzungen nach Anspruch 5 sowie die Verwendung der komplexierten Metallsalze nach Anspruch 6 bzw. 7. Weitere, vorteilhafte Ausgestaltungen sind jeweils Gegenstand der betreffenden Unteransprüche.

Gegenstand der vorliegenden Erfindung gemäß einem ersten Erfindungsaspekt sind somit komplexierte Metallsalze, welche im folgenden auch als Metallkomplexe bezeichnet werden, wobei die komplexierten Metallsalze mindestens einen Liganden sowie mindestens einen Komplexbildner aufweisen, wobei diese komplexierten Metallsalze wasserlöslich und/oder grenzflächenaktiv ausgebildet sind und diese komplexierten Metallsalze insbesondere zur chemischen Bindung bzw. Adsorption von Schadstoffen und/oder geruchsbildenden Substanzen geeignet sind. Die Liganden können ein hydrophobes Kohlenstoffgerüst mit hydrophilen Gruppen aufweisen. Die mit dem Komplexbildner gebildeten komplexierten Metallsalze sind (im Unterschied zu den nichtkomplexierten reinen Metallsalzen, welche wasserunlöslich sind) wasserlöslich. Als Komplexbildner werden insbesondere wasserlösliche Säuren oder Salze von mindestens bifunktionellen Säuren oder auch Ethercarbonsäuren eingesetzt.

Die vorliegende Erfindung betrifft insbesondere komplexierte Metallsalze mit Liganden und mindestens einem Komplexbildner zur chemischen Bindung von Schadstoffen und/oder geruchsbildenden Substanzen, wobei die Liganden im allgemeinen ein hydrophobes Kohlenstoffgerüst mit hydrophilen Gruppen aufweisen, insbesondere mindestens eine hydrophobe Alkylkette mit hydrophilen Gruppen. Das mit dem Komplexbildner gebildete komplexierte Metallsalz ist wasserlöslich und grenzflächenaktiv. Als Komplexbildner werden wasserlösliche Säuren oder Salze von mindestens bifunktionellen Säuren oder auch Ethercarbonsäuren eingesetzt.

Insbesondere'ist Gegenstand der Erfindung ein komplexiertes Metallsalz mit Liganden, insbesondere zur chemischen Bindung von Schadstoffen und/oder geruchsbildenden Substanzen mit Elektronendonoreigenschaften, wobei als Schadstoffe insbesondere aliphatische und aromatische Stickstoffverbindungen, wie Amine, Ammoniak, Stickoxide, Nitrate und Nitrite verstanden werden; dies sind beispielsweise Verbindungen der nachfolgenden allgemeinen Formeln, wobei die aliphatischen und aromatischen Reste durch R symbolisiert sind: NH₃, RNH, R₂NH, R₃N, NₓO_{y}, RNO₂, RuO₃⁻, NO₂⁻, NO₃⁻. Weitere Schadstoffe können aliphatische und aromatische Schwefelverbindungen sein, wie Schwefelwasserstoff, Thiole, Thioether, Sulfonate, Sulfite und Sulfate, die idealisiert durch folgende Formeln dargestellt werden, wobei die aliphatischen und aromatischen Reste durch R symbolisiert sind: H₂S, RSH, R₂S, RSO₃H, RSO₄H, SO₃²⁻, SO₄²⁻. Wiederum weitere Schadstoffe können auch aliphatische und/oder aromatische Carbonsäuren der Formel R-COOH mit R gemäß vorgenannter Bedeutung und/oder aliphatische und aromatische Phosphorverbindungen und anorganische Phosphorverbindungen sein.

Als Liganden im Sinne der vorliegenden Erfindung gelten Verbindungen mit einem hydrophoben Kohlenstoffgerüst mit hydrophilen Gruppen, die insbesondere monofunktionell als Ligand mit dem Metallkation ein Metallsalz bilden. Bevorzugte Liganden weisen mindestens eine hydrophobe Alkylkette mit hydrophilen Gruppen auf. In der Regel sind diese Liganden wasserunlöslich, zumindest sind die mit ihnen gebildeten erfindungsgemäßen Metallsalze, ohne Komplexbildner, wasserunlöslich.

Als Komplexbildner gemäß der Erfindung gelten Verbindungen, die eine koordinative und/oder ionische Bindung zwischen einem Akzeptor (LewisSäure) und einem Donor (Lewis-Base) ausbilden, wobei insbesondere bei der koordinativen Bindung die Bindungselektronen nur von einem der beiden Bindungspartner stammen, und wobei die Komplexbildner gemäß der Erfindung einer wasserlöslichen Säure, einem Anion oder Salz einer mindestens bifunktionellen bis polyfunktionellen Säure oder Ethercarbonsäure entsprechen. Im Gegensatz zu den Liganden verfügen die Komplexbildner nur über ein relativ kleines Kohlenstoffgerüst, d.h. sie weisen in der Regel keine hydrophobe Alkylkette auf. Die genannten Komplexbildner bilden erfindungsgemäß mit einer ihrer Säurefunktionen eine koordinative und/oder ionische Bindung mit dem Metall aus.

Das komplexierte Metallsalz eignet sich in hervorragender Weise zur chemischen Bindung von Schadstoffen und/oder geruchsbildenden Substanzen, insbesondere von Schadstoffen und/oder geruchsbildenden Substanzen mit Elektronendonoreigenschaften. Besonders bevorzugt ist das komplexierte Metallsalz wasserlöslich, insbesondere durch die Komplexbildner, bevorzugt durch die deprotonierten Komplexbildner, die in Lösung als Anion oder als Salz vorliegen können und ihre desodorierenden Eigenschaften beibehalten. Aufgrund des Substitutionsmusters der Liganden, die über hydrophobe und hydrophile Molekülteile verfügen, wird das komplexierte Metallsalz zudem grenzflächenaktiv.

Gemäß dem ersten Aspekt ist Gegenstand der Erfindung ein-komplexiertes Metallsalz zur chemischen Bindung von Schadstoffen und/oder geruchsbildenden Substanzen mit Elektronendonoreigenschaften, wobei das komplexierte Metallsalz der allgemeinen Formel I

[[Lₙ^{m-}(Me^{P+})]-Sₓ^{k-}]•zA^{Y+} (I)

entspricht
- mit Me als Metall, wobei Me = Zink;
- mit p = 1, 2, 3, 4, 5 oder 6, wobei p der Oxidationszahl von Me entspricht;
- mit L als Ligand, wobei L gleich oder unterschiedlich ist, mit 1≤n≤20, wobei der Ligand L abgeleitet aus einem Molekül der allgemeinen Formel II

   B(R¹-D)₁ (II)

   ist
   - mit einer funktionellen Gruppe D = -COOH und/oder ein daraus abgeleitetes Anion oder Salz, wobei m in der Formel I der Ladungszahl der funktionellen Gruppe D als Anion oder im Salz mit m = 1, 2, 3 oder 4 und 1=1 oder 2 entspricht, und
   - wobei R¹ einem mit B funktionalisierten organischen Rest entspricht mit R¹=substituierte lineare, verzweigte und/oder cyclische Alkyl-, Alkenyl-, Alkylaryl-, Arylalkyl-, Alkenylaryl-Gruppe mit 1 bis 40 C-Atomen, wobei R¹ mindestens eine Gruppe B aufweist, und
   - mit B = OH, SO₃⁻,SO₃H, SO₄,-OSO₃H, -COOH, -PO₃⁻, PO₃H, PO₄⁻, PO₄H,-O-(Alkyl-O-)ₐ-Alkyl-OH mit 1≤a≤200 und Alkyl = Methyl-, Ethyl oder Propylgruppe, -SH, -SR, NO₂, NO₃, -NH₂, -NHR², -NR²₂, -NH₃⁺, -NH₂R²⁽⁺⁾, -NHR²₂⁽⁺⁾, -F, -Cl, -I, -Br, Glykol, Glycerin, Polyglykol und/oder Polyglycerin und/oder daraus abgeleitete Anionen oder Salze, wobei R² gleich oder unterschiedlich ist und einer linearen, verzweigten und/oder cyclischen Alkyl-, Alkenyl-, Alkylaryl-Gruppe mit 1 bis 40 C-Atomen entspricht;
- mit mindestens einem Komplexbildner S, wobei S ausgewählt ist aus der Gruppe der wasserlöslichen Säuren, Anionen und/oder Salze der Bi-, Tri-, Polycarbonsäuren, Bi-, Tri-, Polyphosphonsäuren, Bi-, Tri-, Polysulfonsäuren, Bi-, Tri-, Polysulfate, Di-, Tri-, Polyphosphate, Polyethercarbonsäuren und/oder gemischtfunktionellen Verbindungen dieser Säuren, Anionen und/oder Salze mit x = 1, 2, 3 oder 4 und wobei k der Ladungszahl des Anions von S entspricht mit 1 ≤k≤20;
- wobei A gleich oder verschieden ist und einem Wasserstoffproton, einem organischen Kation und/oder einem Metallkation entspricht, insbesondere ein Erdalkali- oder Alkalimetallkation ist, mit z = 1, 2, 3 oder 4 und wobei y der Ladungszahl von A entspricht mit y = 1 oder 2, insbesondere wobei der Betrag von x • k = z • y ist,
wobei das komplexierte Metallsalz wasserlöslich ist.

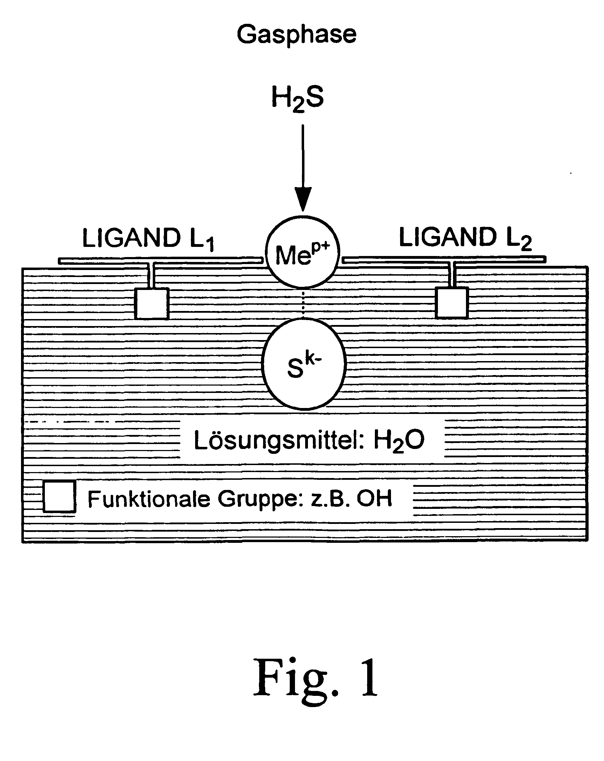

In der Figur 1 wird eine mögliche Struktur der grenzflächenaktiven Komplexe idealisiert, formalistisch dargestellt, und ihre Wirkungsweise an einem Beispiel eines generischen Metallsalzes L₁-Me-L₂ erläutert, das mit einem Komplexbildner S zu einem komplexierten Metallsalzanion [[L₁-Me-L_{2]}-S^{k-}] umgesetzt wurde.

Dabei ist es bevorzugt, wenn nur eine Säurefunktion des Komplexbildners, insbesondere die deprotonierte Säurefunktion als Anion, insbesondere des Komplexbildners S, direkt mit dem Metallatom, insbesondere mit Me, des Metallsalzes eine koordinative und/oder ionische Bindung ausbildet.

Wie zuvor beschrieben, ist erfindungsgemäß das unkomplexierte Metallsalz bestehend aus Metall und Ligand wasserunlöslich.

Erfindungemäß ist dagegen das komplexierte Metallsalz wasserlöslich. Zu diesem Zweck kann als Komplexbildner eine Ethercarbonsäure, deren Anion und/oder ein Salz mit einer Säurefunktion mit dem Metall eine koordinative und/oder ionische Bindung ausbildet, verwendet werden, wobei das Metallsalz insbesondere vor der Komplexierung wasserunlöslich ist.

Gleichfalls kann der Komplexbildner mit einer Säurefunktion, insbesondere der Komplexbildner S, mit dem Metall eine koordinative und/oder ionische Bindung ausbilden und mindestens eine, insbesondere eine weitere, bevorzugt eine Mehrzahl, besonders bevorzugt alle verbliebenen Säurefunktionen des Komplexbildners deprotoniert oder als Anion in einem Salz, insbesondere mit A = organisches Kation oder Metallkation vorliegen, wobei besonders bevorzugt das Kation ein Alkali- oder Erdalkalikation, wie Li⁺, K⁺, Na⁺, Mg²⁺ oder Ca²⁺, ist oder alternativ das komplexierte Metallsalz, insbesondere als Anion in wäßriger Lösung, solvatisiert vorliegt. Die wäßrige Lösung, welche das komplexierte Metallsalz, insbesondere als Anion, enthält, ist vorzugsweise mit einer Base, wie NaOH, NH₄OH, Mg(OH)₂ oder einer anderen üblichen Base alkalisch eingestellt worden. Vorzugsweise liegt der pH-Wert im Bereich von größer 7 bis hin zu 12, bevorzugt zwischen 7,5 bis 11, besonders bevorzugt zwischen 7,1 und 8. Alternativ kann direkt der Komplexbildner als Salz, insbesondere als Alkali- oder Erdalkalisalz, zur Umsetzung mit dem Metallsalz mit Liganden in Gegenwart von Wasser umgesetzt werden.

Das komplexierte Metallsalz ist sowohl als Feststoff, insbesondere als

[[Lₙ^{m-}(Me^{p+})-Sₓ^{k-}]• zA^{Y+}oder [[Lₙ^{m-}(Me^{p+}]-Sₓ]

wie zuvor definiert oder aber auch als Anion in wäßriger Lösung, wie beispielsweise

[[Lₙ^{m-}(Me^{p+})]-Sₓ^{k-}]

grenzflächenaktiv; insbesondere befindet es sich vorzugsweise an der Grenzfläche fest/flüssig, flüssig/flüssig, flüssig/gasförmig und ist in der Lage, Schadstoffe oder Substanzen zu adsorbieren. So reduzieren die Komplexe die Oberflächenspannung, und es kann ausgeprägte Schaumbildung auftreten.

Die komplexierten Metallsalze sind aufgrund der Grenzflächenaktivität in der Lage, an der Grenzfläche Wasser/Gasphase bzw. Wasser/Luft und/oder Wasser/Öl und/oder Wasser/Lösungsmittel Schadstoffe und/oder geruchsintensive Substanzen zu adsorbieren. Überraschenderweise sind die komplexierten Metallsalze nur auf diese Weise in der Lage, schwefel- und stickstoffenthaltende gasförmige Verbindungen sowie Carbonsäuren aus der Gasphase bzw. Atmosphäre effektiv chemisch zu binden. Die Konstitution der Substituenten und/oder die Konformation der Substituenten sind notwenig, um die komplexierten Metallsalze grenzflächenaktiv und wasserlöslich zu machen. An der Luft/Wasser- oder Wasser/Öl- oder Wasser/Lösungsmittel-Grenzfläche werden die Liganden parallel zur Grenzfläche orientiert, wodurch das Metallatom sterisch für die koordinative und/oder ionische Bindung mit den Schadstoffmolekülen zugänglich wird.

Aber auch als Feststoff ist das komplexierte Metallsalz in der Lage aus organischen Lösemitteln oder der Gasphase Schadstoffe und/oder geruchsbildende Substanzen, insbesondere mit Elektronendonoreigenschaften, chemisch zu binden.

Gegenstand der Erfindung ist auch eine vorzugsweise wäßrige Lösung oder Zusammensetzung, enthaltend das komplexierte Metallsalz, insbesondere im wesentlichen gelöst, vorzugsweise vollständig gelöst, insbesondere als [[Lₙ^{m-}(Me^{P+})]-Sₓ^{k-}]• zA^{y+} oder [[Lₙ^{m-}(Me^{P+})]-Sₓ] wie zuvor definiert oder auch als Anion in wäßriger Lösung, wie beispielsweise [[Lₙ^{m-}(Me^{P+})]-Sₓ^{k-}], und/oder enthaltend das komplexierte Metallsalz als Feststoff, insbesondere als Salz, beispielsweise als Alkalisalz (z. B. als Natrium- oder Kaliumsalz) oder als Erdalkalisalz, z. B. mit Calcium oder Magnesium, oder aber mit anderen üblichen Gegenionen.

Es wird angenommen, daß die Bildung der komplexierten Metallsalze bei Zugabe eines Komplexbildners zu einem Metallsalz über die folgenden, idealisiert dargestellten Reaktionen ablaufen:
1. LₙMe + q H₂O +MₖS → {[LₙMe]-SH_{q}}^{(k-q)-} + kM⁺ + q OH⁻
2. {[LₙMe]-SHq}^{(k-q)-} + q OH→ {[LₙMe]-S}^{k-} + q H₂O

Bei Verwendung einer Ethercarbonsäure kann die folgende idealisierte Reaktion ablaufen:

LₙMe + R-O(CH₂CH_{2O})n-CH₂-COOH + H_{2O} → R-O-(CH₂CH₂O)ₙ-CH₂-COO-[LₙMer]⁻ + H₃O⁺

Gegenstand der Erfindung ist auch ein Verfahren zur Herstellung eines komplexierten Metallsalzes, insbesondere der allgemeinen Formel I, als auch ein nach diesem Verfahren erhältliches komplexiertes Metallsalz sowie eine vorzugsweise wäßrige Zusammensetzung, enthaltend ein komplexiertes Metallsalz, erhältlich nach diesem Verfahren,
indem ein Metallsalz der allgemeinen Formel III

[[Lₙ^{m-}(Me^{P+})] (III)

- mit Me = Zink,
- mit p = 1, 2, 3, 4, 5 oder 6, wobei p der Oxidationszahl von Me entspricht,
- mit L als Ligand, wobei die Liganden abgeleitet aus Verbindungen mit einem hydrophoben Kohlenstoffgerüst mit hydrophilen Gruppen sind, wobei sie in der Regel als Anion im Metallsalz vorliegen, insbesondere wobei die Liganden aus mindestens einer funktionalisierten Säure abgeleitet sind, insbesondere wobei L gleich oder unterschiedlich ist mit 1 ≤ n ≤ 20, insbesondere mit 1 ≤ n ≤ 10, wobei der Ligand L abgeleitet ist aus einem Molekül der allgemeinen Formel II

   B(R¹-D)ₗ (II)

   - mit einer funktionellen Gruppe D, wobei erfindungsgemäß D mit dem Metall das Metallsalz bildet, mit D = -COOH und/oder ein daraus abgeleitetes Anion oder Salz, wobei m in der Formel III der Ladungszahl der funktionellen Gruppe D als Anion oder im Salz entspricht, mit m = 1, 2, 3 oder 4, besonders bevorzugt m = 1 oder 2 und 1 = 1 oder 2,
   - wobei R¹ einem mit B funktionalisierten organischen Rest entspricht mit R¹ = substituierte lineare, verzweigte und/oder cyclische Alkyl-, Alkenyl-, Alkylaryl-, Arylalkyl-, Alkenylaryl-Gruppe mit 1 bis 40 C-Atomen, bevorzugt 8 bis 30 C-Atomen, insbesondere 8 bis 24 C-Atomen, und die Aryl-Gruppe 6 oder 12 C-Atome aufweist, wobei R¹ mindestens eine Gruppe B, insbesondere an einem primären, sekundären und/oder tertiären C-Atom, besonders bevorzugt an einem sekundären C-Atom einer Alkyl-Gruppe, aufweist, besonders bevorzugt R¹ eine Vielzahl an Gruppen B aufweist, insbesondere 1 bis 20, bevorzugt 1 bis 10,
   - mit B = OH, SO₃⁻; SO₃H, SO₄⁻, -O-SO₃H, -COOH, PO₃⁻, PO₃H, PO₄⁻, PO₄H, wie beispielsweise -O-PO(OH)₂, (-O-)₂-PO(OH) oder -PO(OH)₂ und/oder entsprechende Anionen; -O-(Alkyl-O-)ₐ-Alkyl-OH mit 1 ≤ a ≤ 200, bevorzugt ist 1 ≤ a ≤ 100, und Alkyl = Methyl-, Ethyl- oder Propylgruppen, wie -O-(CH₂CH₂-O-)ₐ-CH₂-CH₂-OH oder -O-(CH₂-O-)ₐ-CH₂-OH entspricht; -SH, -SR, NO₂, NO₃, -NH₂, -NHR², -NR²2, -NH₃⁺, -NH₂R²⁽⁺⁾, -NH²₂⁽⁺⁾, -F, -Cl, -I, -Br, Glykol, Glycerin, Polyglykol und/oder Polyglycerin und/oder daraus abgeleitete Anionen oder Salze, wobei R² gleich oder unterschiedlich ist und einer linearen, verzweigten und/oder cyclischen Alkyl-, Alkenyl-, Alkylaryl-Gruppe mit 1 bis 40 C-Atomen, bevorzugt 1 bis 30 C-Atome, insbesondere 1 bis 24 C-Atome und die Aryl-Gruppe 6 oder 12 C-Atome aufweist, entspricht, wobei erfindungsgemäß das Metallsalz bestehend aus Metall und Ligand wasserunlöslich ist,
mit mindestens einem Komplexbildner S, wie einer wasserlöslichen Säure, wie HₖS, insbesondere mit H = A, oder eines wasserlöslichen Salzes, wie AₖS, einer wasserlöslichen, mindestens bifunktionellen Säure bis polyfunktionellen Säure oder Ethercarbonsäure umgesetzt wird, wobei S ausgewählt ist aus der Gruppe der wasserlöslichen Säuren oder deren Anionen und/oder Salze der Bi-, Tri-, Polycarbonsäuren, Bi-, Tri-, Polyphosphonsäuren, Bi-, Tri-, Polysulfonsäuren, Bi-, Tri-, Polysulfate, Di-, Tri-, Polyphosphate und/oder Polyethercarbonsäuren und/oder gemischtfunktionelle Verbindungen der Säuren, Anionen und/oder Salze, gemäß vorstehender Definition, in Gegenwart von Wasser, insbesondere in Wasser, und gegebenenfalls in Gegenwart einer Base umgesetzt wird. Bei Zusetzen einer Ethercarbonsäure ist der resultierende Komplex neutral.

Als Basen kommen alle üblichen Basen in Betracht, wie insbesondere ein Alkalihydroxid, Erdalkalihydroxid und/oder eine organische Base; Beispiele für übliche Basen sind NaOH, NH₄OH und Mg(OH)₂. Dem Fachmann sind zusätzliche übliche Basen geläufig. Der pH-Wert wird üblicherweise auf einen Wert oberhalb von 7 bis hin zu 12, insbesondere auf einen Wert zwischen 7,5 bis 11, bevorzugt auf einen Wert zwischen 7,1 und 8 eingestellt. Der Komplexbildner, insbesondere der Komplexbildner S, wird vorzugsweise äquimolar zum Metallsalz im Verhältnis von 1:1 eingesetzt; zweckmäßig kann auch ein Verhältnis von 2, 3 oder 4 Mol zu einem Mol Metallsalz sein.

Das Kation A im gebildeten komplexierten Metallsalz kann gleich oder verschieden sein und einem Wasserstoffproton, einem organischen Kation und/oder einem Metallkation, gemäß vorstehender Ausführungen, wie beispielsweise einem Erdalkali- oder Alkalimetallkation, insbesondere einem Kation aus der zugesetzten Base, entsprechen.

Die Umsetzung des Metallsalzes, insbesondere der Formel III, erfolgt in Gegenwart von Wasser bei einer Temperatur zwischen 0 °C und 100 °C; bevorzugt erfolgt die Umsetzung bei einer Temperatur zwischen 20 °C bis 80 °C, besonders bevorzugt bei einer Temperatur zwischen 40 °C und 80 °C, insbesondere unter Rühren, Schütteln oder anderen Maßnahmen, die eine Vermischung des Metallsalzes, des Komplexbildners und Wasser bewirken.

Gegenstand der Erfindung ist auch ein Verfahren zur Herstellung des komplexierte Metallsalzes, insbesondere der allgemeinen Formel I, als auch ein nach diesem Verfahren erhältliches komplexiertes Metallsalz sowie eine vorzugsweise wäßrige Lösung, enthaltend ein komplexiertes Metallsalz, insbesondere der allgemeinen Formel I, erhältlich nach diesem Verfahren,
indem ein Metallsalz II, mindestens ein Ligand und mindestens ein Komplexbildner in Gegenwart von Wasser und gegebenenfalls in Gegenwart einer Base umgesetzt wird;
wobei ein Metallsalz II gegebenenfalls als Hydrat oder Solvat, vorzugsweise ein anorganisches Metallsalz II,
- mit einem Zinkion; und
- mit mindestens einem Gegenion, insbesondere mindestens einem anorganischen Gegenion, insbesondere ein Sulfat, Carbonat, Halogenid, Hydroxid und/oder mit mindestens zwei der genannten Gegenionen im Metallsalz II,
mit mindestens einem Liganden, insbesondere L, gemäß der vorstehenden Definition, bevorzugt mindestens ein Ligand der allgemeinen Formel II, wobei der Ligand selbst eingesetzt; und mit mindestens einem Komplexbildner, insbesondere S bzw. HₖS, gemäß der vorstehenden Definition für Komplexbildner, in Gegenwart von Wasser und gegebenenfalls in Gegenwart einer Base umgesetzt wird.

Durch Entfernen des Wassers kann das komplexierte Metallsalz gewonnen werden, wobei vorzugsweise das Metallsalz eine Restfeuchte aufweist.

Die Umsetzung des Metallsalzes II erfolgt in Gegenwart von Wasser bei einer Temperatur zwischen 0 °C und 100 °C; bevorzugt erfolgt die Umsetzung bei einer Temperatur zwischen 20 °C bis 80 °C, besonders bevorzugt bei einer Temperatur zwischen 40 °C und 80 °C, insbesondere unter Rühren, Schütteln oder anderen Maßnahmen, die eine Vermischung des Metallsalzes II, des Liganden, des Komplexbildners und Wasser bewirken. Als Base kommen die vorstehend genannten in Betracht.

Erfindungsgemäß wird das in Wasser gelöste komplexierte Metallsalz, insbesondere das komplexierte Metallsalz der allgemeinen Formel I, gewonnen; insbesondere wird es durch Auskristallisieren, Eindampfen, Ausfällen, Sprühtrocknen oder einer anderen Methode als Feststoff isoliert. Dies geschieht in der Regel bei einer erhöhten Temperatur und gegebenenfalls bei vermindertem Druck, beispielsweise bei 60 °C bis 80 °C und gegebenenfalls bei vermindertem Druck.

Eine bevorzugte wäßrige Zusammensetzung besteht aus dem komplexierten Metallsalz und Wasser, insbesondere einem komplexierten Metallsalz nach Formel I, und gegebenenfalls aus nicht gebundenen Liganden, Komplexbildnem und/oder Basen, wobei die Basen ausgewählt sind aus Erdalkaliund/oder Alkalihydroxiden. Die erfindungsgemäße wäßrige Zusammensetzung, enthaltend ein komplexiertes Metallsalz, insbesondere ein komplexiertes Metallsalz nach Formel I, kann gegebenenfalls weitere Hilfsstoffe und/ oder Wirkstoffe, wie Emulgatoren, Verdickungsmittel etc., sowie weitere übliche Zusatzstoffe enthalten, um beispielsweise die wäßrige Zusammensetzung bei Bedarf in eine kosmetische Formulierung, eine Formulierung als Reinigungsmittel etc. zu überführen.

Eine bevorzugte Zusammensetzung, enthaltend ein komplexiertes Metallsalz, insbesondere ein komplexiertes Metallsalz nach Formel I, kann gegebenenfalls weitere Hilfsstoffe, Lösemittel und/oder Wirkstoffe, wie Emulgatoren, Verdickungsmittel etc., sowie weitere übliche Zusatzstoffe enthalten, um beispielsweise eine nichtwäßrige Zusammensetzung bei Bedarf in eine Formulierung zu überführen.

Der Gehalt an komplexiertern Metallsalz in der Zusammensetzung kann zwischen 0,1 Gew.-% und 99 Gew.-%, insbesondere zwischen 0,1 und 75 Gew.-%, bevorzugt zwischen 0,1 und 50 Gew.-%, besonders bevorzugt zwischen 0,1 und 15 Gew.-% betragen.

Ein weiterer erfindungsgemäßer Gegenstand ist einerseits die Verwendung des komplexierten Metallsalzes, insbesondere der allgemeinen Formel I, oder die Verwendung einer Zusammensetzung, enthaltend das komplexierte Metallsalz, zur chemischen Bindung, insbesondere Adsorption, von Schadstoffen und/oder geruchsbildenden Substanzen, insbesondere von Schadstoffen und/ oder Substanzen mit Elektronendonoreigenschaften. Typische Anwendungsfelder sind desodorierend oder neutralisierend wirkende, hygienische und/oder kosmetische Formulierungen, Haushaltsreiniger, Industriereiniger, Adsorber in Filtern, Formulierungen für die Anwendung in der privaten und/oder gewerblichen Tierhaltung, Formulierungen für die Behandlung und/oder Modifizierung von textilen Fasern, Geweben oder in Waschmittelzusammensetzungen sowie in pharmazeutischen Formulierungen sowie weiterer denkbarer Anwendungsgebiete von Formulierungen oder Zusammensetzungen.

Alternativ kann das komplexierte Metallsalz oder eine Zusammensetzung, enthaltend das komplexierte Metallsalz, insbesondere der allgemeinen Formel I, auch zur Behandlung und/oder Modifizierung von Substraten oder Oberflächen von Substraten verwendet werden. Die Behandlung und/oder Modifizierung von Substraten oder Oberflächen kann durch Verdampfen einer Zusammensetzung, enthaltend das komplexierte Salz, erfolgen, indem das komplexierte Metallsalz auf der Oberfläche oder dem Substrat abgeschieden wird. Typische Substrate sind textile Materialien, Silikate, Siliciumdioxid, Titandioxid, Pappe, Aktivkohlen, Kunststoffe sowie weitere denkbare Trägermaterialien, auf denen die komplexierten Metallsalze aufgebracht werden können.

Im Rahmen der vorliegenden Erfindung wurde somit überraschenderweise gefunden, daß sich Metallseifen zu Komplexen umsetzen lassen, die wasserlöslich sind und ihre desodorierenden Eigenschaften behalten. Dazu ist im Gegensatz zum Stand der Technik folgendes erforderlich: Zn-Seife, Komplexierungsmittel, Wasser und gegebenenfalls eine Base (z. B. NaOH) zur Stabilisierung des pH-Wertes und die diesbezügliche Umsetzung zu den erfindungsgemäßen komplexierten Metallsalzen.

Wie zuvor beschrieben, sind die Komplexierungsmittel bevorzugt Anionen der Bi- Tri- und Polycarbonsäuren, Anionen der Bi-, Tri- und Polyphosphonsäuren, Anionen der Bi-, Tri- und Polysulfonsäuren, Anionen aller gemischten Formen der obengenannten Säuren, Anionen der wasserlöslichen Ethercarbonsäuren R-O(-C-C-O)n-C-COO⁻, Di-, Tri- Polysulfate, Di-, Tri-Polyphosphate und Mischformen.

Es wurde überraschend gefunden, daß eine Säurefunktion, vorzugsweise genau eine Säurefunktion, des Komplexierungsmittels (z. B. Carboxylat, Phosphonat, Sulfonat, Sulfat, Phosphat etc.) direkt mit dem Metallatom eine koordinative und/oder ionische Bindung eingeht. Weiterhin wurde überraschenderweise festgestellt, daß der entstehende Komplex im allgemeinen nur dann wasserlöslich wird, wenn der pH-Wert mit einer Lauge so eingestellt wird, daß eine vollständige Deprotonierung der verbleibenden Säurefunktionen, die nicht mit dem Metall komplexieren, eintritt. Der Komplex wird dann negativ geladen und somit wasserlöslich.

Die Herstellung der erfindungsgemäßen Komplexe erfolgt im allgemeinen, wie zuvor beschrieben, durch Reaktion der Komplexierungsmittel mit der Metallseife in der Wärme im Lösungsmittel Wasser. Die Zugabe von OH⁻-Ionen führt in der Wärme unter Rühren oder Schütteln zur raschen Auflösung des gebildeten Komplexes in Wasser. Nach Abkühlen bleibt dieser Komplex in Lösung. Es entsteht ein klare Flüssigkeit, die auch in der Kälte stabil bleibt.

Die Anmelderin konnte zeigen, daß die entstehenden neuen Komplexe grenzflächenaktiv sind. Die Komplexe reduzieren die Oberflächenspannung und zeigen in wäßriger Lösung z. B. eine ausgeprägte Schaumbildung. Diese neuen Komplexe sind aufgrund der Grenzflächenaktivität nun in der Lage, an der Wasser/Luft- oder Wasser/Öl-Grenzfläche zu adsorbieren. Überraschenderweise sind diese Komplexe dann und nur dann in der Lage, schwefel- und stickstoffhaltige gasförmige Verbindungen sowie Carbonsäuren aus der Gasphase/Atmosphäre effektiv chemisch zu binden.

Weiterhin können die neuen Komplexverbindungen auf beliebigen festen Trägermaterialien aufgebracht werden. Durch Verdampfen des Lösungsmittels Wasser entstehen auf den Festkörpermaterialien die Salze der neuen Komplexverbindungen. Die Säurefunktionen des Komplexierungsmittels sind im Trockenen durch ein Kation (z. B. Na⁺) abgesättigt. In getrocknetem Zustand sind diese Festkörpermaterialien (= Festkörper + Komplex) dann geeignet, die obengenannten Schadstoffe aus der Gasphase/Atmosphäre sowie aus organischen Lösungsmitteln zu adsorbieren, wobei ein Gehalt an Restfeuchte zugegen sein sollte. Der Gehalt an Restfeuchte bzw. Wasser ist erforderlich, um die Adsorption von Schadstoffen zu ermöglichen. In der Regel sind die absolut wasserfreien Komplexe nicht in der Lage Schadstoffe zu absorbieren. Der Gehalt an Restfeuchte bzw. Wasser in Bezug auf das Gesamtsystem Komplex und Restfeuchte sollte zwischen 0,5 und 5 Gew.-% betragen, insbesondere zwischen 0,5 und 2,5 Gew.-%, besonders bevorzugt 0,5 bis 1 Gew.-%. Absolut trockene, d.h. wasserfreie Komplexe, können durch Befeuchten, in Gegenwart von Luftfeuchtigkeit oder durch Auflösen in Wasser erneut aktiviert werden.

Die neuen Komplexverbindungen können auch als feste Salze durch Verdampfen des Lösungsmittels Wasser gewonnen werden. Die Salze adsorbieren die obengenannten Schadstoffe aus der Gasphase und aus organischen Lösungsmitteln, insbesondere wenn die Salze den genannten Gehalt an Restfeuchte aufweisen.

Eine formale Darstellung der Struktur der grenzflächenaktiven Komplexe und ihre Wirkungsweise am Beispiel des Metallsalzes L₁-Me-L₂ findet sich in der Figur 1.

Bevorzugterweise sollte dabei der Ligand L bzw. das schadstoffabsorbierende Metallsalz folgende Eigenschaften haben:
Das nichtkomplexierte Metallsalz sollte wasserunlöslich sein. Die Liganden L im Metallsalz sind demzufolge hydrophob und als reine Substanzen ebenfalls unlöslich in Wasser. Die Liganden müssen jedoch eine hydrophile Gruppe als Substituenten aufweisen. Hydrophile Gruppen sind z. B. -OH, -SO₃⁻, SO₃H, - SO₄⁻, SO₄H, -COO⁻, -COOH, -PO₃⁻ PO₃H, PO₄⁻, PO₄H, -O-(C-C-O-)ₙC-C-OH (n=1, 2, ....N), -SH, -S⁻, -SR, NO₂, NO₃⁻, -NH₂, -NHR, -NR₂, -NH₃⁺, - NH₂R⁺, -NH₂⁺, Glykole, Glycerin, Polyglykole, Polyglycerine, F, Cl, I, Br etc.

Es wurde gefunden, daß diese Konformation der Substituenten deshalb nötig ist, da durch die Herstellung des neuen Komplexes das Metallsalz wasserlöslich und grenzflächenaktiv wird. An der Wasser/Luft- oder Wasser/Öl-Grenzfläche werden die Liganden parallel zur Grenzfläche orientiert. Dadurch wird das Metallatom sterisch für die koordinative und/oder ionische Bindung mit den Schadstoffmolekülen zugänglich.

Die grenzflächenaktiven neuen Komplexe sind in der Lage, geruchsbildende Substanzen und Schadstoffe der zuvor beschrieben Art chemisch zu binden.

Mögliche Anwendungen sind die Herstellung von desodorierend oder Schadstoffe neutralisierenden bzw. adsorbierenden hygienischen und/oder kosmetischen Formulierungen, Haushaltsreinigern, Industriereinigern, Adsorbern in Filtern, Formulierungen für die Anwendung in der privaten und gewerblichen Tierhaltung, Formulierungen für die Behandlung von textilen Fasern und Geweben, Waschmittelzusammensetzungen und dergleichen.

Gemäß einer erfindungsgemäß besonders bevorzugten Ausführungsform können die erfindungsgemäßen Komplexe durch die folgende Formel wiedergegeben werden

[Lₙ(Me)]-S^{k-}

wobei folgendes gilt:
- Me ist Zink;
- Lₙ sind Liganden, wobei es gilt: L₁ = L₂ = ... = Lₙ₋₁, = Lₙ (gleichartige Liganden) oder wobei die Liganden auch unterschiedlich sein können, wie z. B. L₁ ≠ L₂ =...= Lₙ₋₁, = Lₙ;
- Liganden können sein:
   Funktionalisierte Fettsäuren: Fettsäuren, deren hydrophobe Alkylketten durch eine oder mehrere Gruppen der folgenden Art in der Seitenkette tragen: -OH, -SO₃⁻, SO₃H, -SO₄⁻, SO₄H, -COO⁻, -COOH, -PO₃⁻, PO₃H, PO₄⁻, PO₄H, -O-(C-C-O-)ₙ-C-C-OH (n=1, 2, ....N), -SH, -S⁻, -SR, NO₂, NO₃⁻, - NH₂, -NHR, -NR₂, -NH₃⁺, -NH₂R⁺, -NHR₂⁺ F, Cl, I, Br;
   Funktionalisierte aromatische Carbonsäuren, die eine oder mehrere Gruppen der folgenden Art in der Seitenkette tragen: -OH, -SO₃⁻, SO₃H, -S04⁻, SO₄H, -COO⁻, -COOH, -PO₃⁻ PO₃H, PO₄⁻, PO₄H, -O-(C-C-O-)ₙ-C-C-OH (n=1, 2, ....N), -SH, -S⁻, -SR, NO₂, NO₃⁻, -NH₂, -NHR, -NR₂, -NH₃⁺, -NH₂R⁺, -NHR₂⁺, F, Cl, I, Br
- S ist der Solubilisator oder Komplexierungsmittel:
- Als Komplexierungsmittel S werden die wasserlöslichen Säuren oder Salze der
   Bi-, Tri- und Polycarbonsäuren
   Bi-, Tri- und Polyphosphonsäuren
   Bi-, Tri- und Polysulfonsäuren
   gemischte Formen der obengenannten Salze
   wasserlösliche Ethercarbonsäuren R-(-O-C-C)ₙ-COOH bzw. R-(-O-C-C)ₙ-C-COO⁻ und deren Derivate
   Di-, Tri- Polysulfate, Di-, Tri- Polyphosphate und Mischformen verwendet.
- Der resultierende grenzflächenaktive Komplex ist k-fach negativ geladen; im Falle der Ethercarbonsäuren hat er die Ladung 0.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird nachfolgend anhand von Ausführungsbeispielen veranschaulicht, welche die vorliegende Erfindung jedoch keinesfalls beschränken.

### Ausführungsbeispiele:

### Allgemeines Beispiel I:

Die in Wasser unlöslichen Metallsalze, insbesondere der obigen allgemeinen Formel III [[Ln^{m-}(Me^{P+})] werden in der Wärme bei 40 °C bis 80 °C unter Zusatz des entsprechenden Komplexierungsmittels, wie des Komplexierungsmittels S, insbesondere der Säure HₖS oder des Salzes des Komplexierungsmittels AₖS und unter Zugabe einer Base, wie Natronlauge (NaOHaq), gelöst.

### Allgemeines Beispiel II:

Die in Wasser unlösliche Metallverbindung LₙMe wird in der Wärme bei 40 bis 80 °C unter Zusatz des entsprechenden Komplexierungsmittels HₖS oder des Salzes des Komplexierungsmittels und unter Zugabe einer Base (z. B. NaOH gelöst.

### Allgemeines Beispiel III:

Gemäß einer Alternative können die komplexierten Metallsalze auch aus ihren Rohstoffen erhalten werden. Dazu wird mindestens ein Ligand, insbesondere eine funktionalisierte Fettsäure, ein Metallsalz II, bevorzugt ein anorganisches Metallsalz, wie Me^{P+} mit mindestens einem Gegenion, beispielsweise ein Metallsulfat, Metallcarbonat, Metallhalogenid, Metallhydroxid oder ein anderes übliches Salz, mit einem Komplexierungsmittel und Wasser, gegebenenfalls unter Zusatz einer Base, beispielsweise Natriumhydroxid, direkt umgesetzt, um das komplexierte Metallsalz zu erhalten.

Dazu wird der Ligand, insbesondere eine funktionalisiert Fettsäure in Wasser mit dem Komplexierungsmittel versetzt, vorzugsweise im Molverhältnis 1:1 oder stöchiometrisch in Bezug auf die koordinativen und/oder zu ionisierenden Gruppen. Unter Zugabe einer Base werden der Ligand, hier die Fettsäure, und das Komplexierungsmittel gelöst. Anschließend wird im entsprechenden Molverhältnis zur Fettsäure eine wäßrige Lösung des Metallsalzes zugegeben. Mit einer Base wird ein pH-Wert oberhalb von 7 bis hin zu 12 eingestellt, insbesondere auf einen pH-Wert zwischen 7,5 bis 11, bevorzugt auf einen Wert zwischen 7,1 und 8.

### Beispiel 1:

Als Metallsalz wird die Zinkseife Zinkrizinoleat [Zn(C,gH₃₃O₃)_{2]} mit dem Komplexierungsmittel Oxalsäure umgesetzt. Dazu werden ein Gramm Zinkrizinoleat zusammen mit 1,13 g Oxalsäure in einem 100 ml Becherglas eingewogen und 25 ml destilliertes Wasser zugegeben. Unter Rühren wird die Suspension auf 75 °C erhitzt. Nachdem das Zinkrizinoleat geschmolzen ist, wird tropfenweise 5 M Natronlauge zugegeben, bis das geschmolzene Zinkrizinoleat bei einem pH-Wert von 7 bis 8 klar in Lösung geht. Es ist eine Schaumbildung zu erkennen. Anschließend wird die klare Lösung auf Raumtemperatur abgekühlt.

Die folgende Reaktionsgleichung stellt die bei der Umsetzung ablaufende Reaktion dar:

Zn(C₁₈H₃₃O₃)₂ + HOOC-COOH + 2 OH⁻ → ([Zn(C₁₈H₃₃O₃)_{2]}-OOC-COO" }²⁻+ 2 H₂O

### Beispiel 2:

Als Metallsalz wird die Zinkseife Zinkrizinoleat [Zn(C₁₈H₃₃O₃)₂] mit dem Komplexierungsmittel 1-Hydroxyethyn-(1,1-diphosphonsäure) (HEDP) umgesetzt. Dazu werden ein Gramm Zinkrizinoleat zusammen mit 0,560 g 60%iger 1-Hydroxyethyn-(1,1-diphosphonsäure) in einem 100-ml-Becherglas eingewogen und 25 ml destilliertes Wasser zugegebenen. Unter Rühren wird die Suspension auf 75 °C erhitzt. Nachdem das Zinkrizinoleat geschmolzen ist, wird tropfenweise 5 M Natronlauge zugegeben, bis das geschmolzene Zinkrizinoleat klar in Lösung geht. Es ist eine Schaumbildung zu erkennen.

Entsprechend dem Beispiel 1 oder 2 wurde auch Zinkrizinoleat [Zn(C₁₈H₃₃O₃)₂] mit dem Komplexierungsmittel Asparaginsäure umgesetzt.

Alternativ können auch direkt die entsprechenden wasserlöslichen Salze der Komplexierungsmittel mit Zinkrizinoleat [Zn(C₁₈H₃₃O₃)_{2]} umgesetzt werden. Komplexierte Metallsalze wurden auch mit den Komplexierungsmitteln Ethylendinitriloessigsäure-Tetranatriumsalz, 1-Hydroxyethan-(1, 1-diphosponsäure)-dinatriumsalz, Oxalsäuredinatriumsalz, Weinsäuredinatriumsalz (meso, d und/oder 1) in Wasser hergestellt.

### Beispiel 3: Herstellung einer 33%igen ZnRi/LF2-Lösung

In einem 100 ml Becherglas werden 5 g Zinkrizinoleat (ZnRi) sowie 10 g Ethercarbonsäure (LF2 = CH₃-(CH₂)₇-(OCH₂CH₂)₈-COOH) gemischt und unter Rühren auf ca. 75-80 °C erhitzt. Nach dem Abkühlen im Wasserbad auf Raumtemperatur wird eine hochviskose, leicht trübe Lösung erhalten. Unter Rühren kann diese Lösung mit destilliertem Wasser verdünnt werden. Mit der Verdünnung wird die leicht trübe Lösung in der Regel wieder klar.

Der entstehende Komplex

{[Zn(C₁₈H₃₃O₃)₂] [CH₃-(CH₂)₇-(OCH₂CH₂)₈-COO]}⁻

ist in Wasser grenzflächenaktiv und die wäßrige Lösung ist in der Lage NH₃ und H₂S zu absorbieren. Der Komplex kann auf festen Trägern unter Abdampfen des Lösungsmittels Wasser aufgebracht werden. Die modifizierten festen Trägermaterialien sind in der Lage, NH₃ und H₂S zu absorbieren.

### Beispiel 4: Herstellung einer 2,5%igen Lösung des Komplexes [CH₃-(CH₂)₇-(OCH₂CH₂)₈-COO]₃Zn}⁻ aus ZnCO₃ und der Ethercarbonsäure.

In einem 100 ml Becherglas werden 2,5 g basisches Zinkcarbonat sowie 97,5 g Ethercarbonsäure (LF2 = CH₃-(CH₂)₇-(OCH₂CH₂)₈-COOH) gemischt und unter Rühren auf ca. 100-105 °C erhitzt. Nach dem Abkühlen im Wasserbad auf Raumtemperatur wird eine viskose, trübe Lösung erhalten. Die Lösung kann unter Rühren mit destilliertem Wasser verdünnt werden. Durch die Verdünnung wird die Lösung in der Regel wieder klar. Der Komplex kann auf festen Trägern unter Abdampfen des Lösungsmittels Wasser aufgebracht werden. Die modifizierten festen Trägermaterialien sind in der Lage, NH₃ und H₂S zu absorbieren.

### Beispiel 5:

1,5 g Rizinolsäure (0,005 mol) werden mit 20 ml destilliertem Wasser und 0,52 g HEDP (0,025 mol; HEDP= 1-Hydroxyethan-(1,1-diphosphonsäure)-Dinatriumsalz) in einem 250 ml Erlenemeyerkolben vorgelegt. Anschließend wird 6M Natronlauge so lange tropfenweise zugegeben bis eine klare Lösung resultiert, der pH-Wert liegt bei etwa 8,1. Dann werden 0,725 g (0,0025 mol) Zinksulfat Heptahydrat, gelöst in 10 ml Wasser, mit Hilfe einer Pipette tropfenweise zugeführt. Durch weitere tropfenweise Zugabe der 6M Natronlauge entsteht bei pH 8 eine klare Lösung. Diese Lösung enthält den neuen grenzflächenaktiven Komplex.

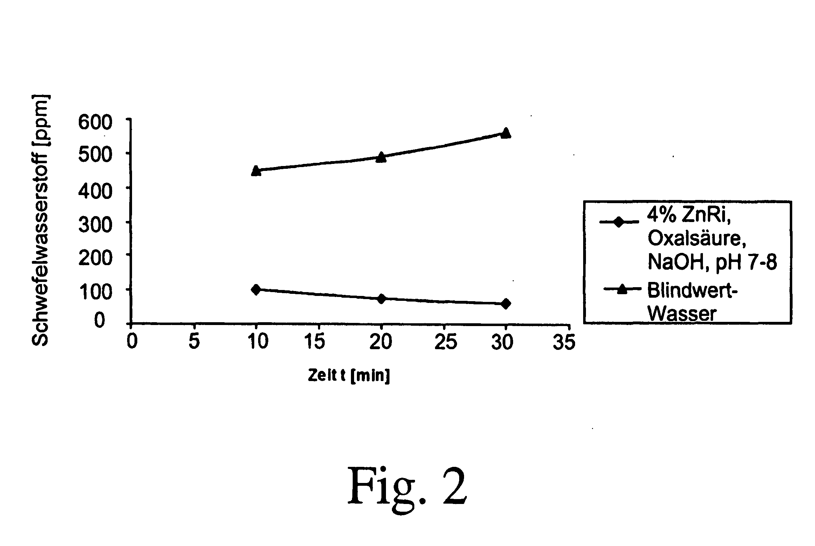

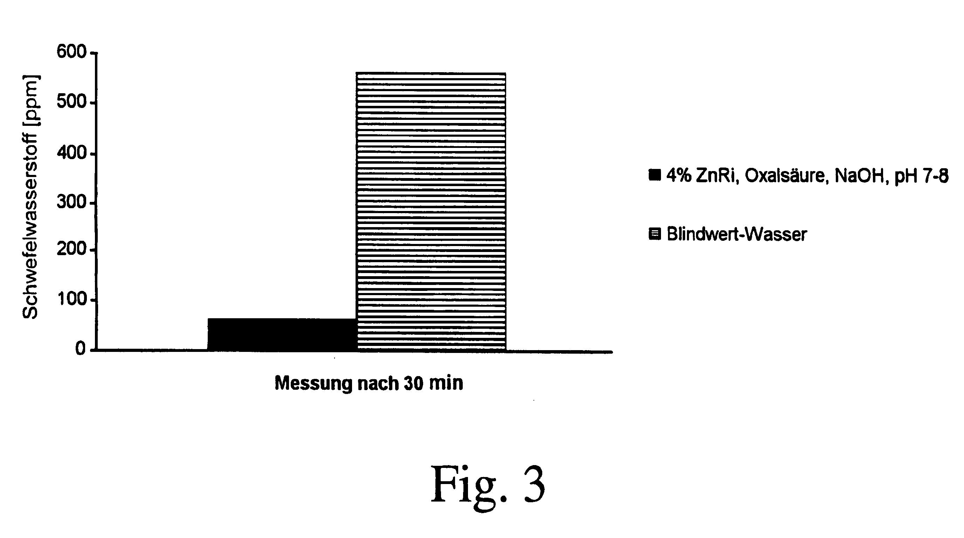

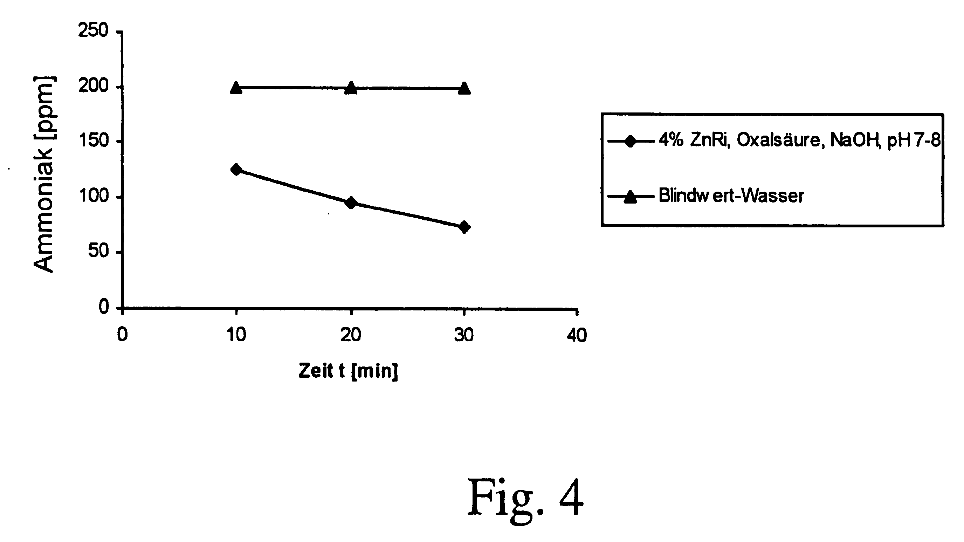

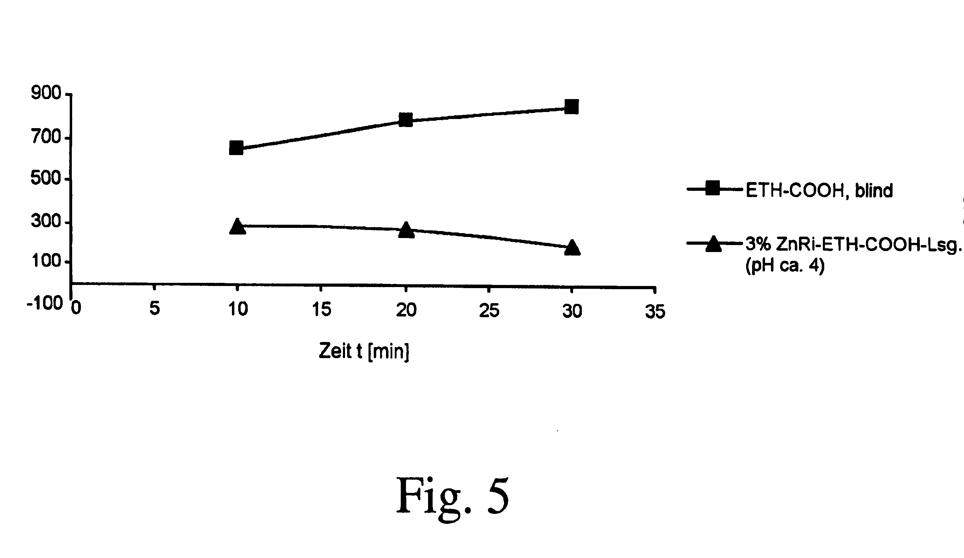

Die Messung der Schadstoffadsorption wird anhand der folgenden in den Figuren 1 bis 6 dargestellten Ausführungsbeispiele näher dargestellt:
- Figur 1:: Stellt eine mögliche idealisierte Struktur der grenzflächenaktiven Komplexe dar.
- Figur 2:: Stellt die Adsorption von H₂S (1 ml, 1:100 verdünnte, gesättigte Natriumsulfitlösung, 100 µl 99% HAC, Essigsäure) am Wirkstoffkomplex [Zn(C₁₈H₃₃O₃)₂]-OOC-COO⁻ in einem flüssigen System bei pH 7-8, eingestellt mit NaOH, mit Ri = (C₁₈H₃₃O₃)₂ gegenüber einer Blindprobe aus Wasser, dar.
- Figur 3:: Stellt den Schwefelwasserstoffgehalt nach 30minütiger Adsorption am Wirkstoffkomplex [Zn(C₁₈H₃₃O₃)₂]-OOC-COO⁻ in einem flüssigen System bei pH 7-8, eingestellt mit NaOH, mit Ri = (C₁₈H₃₃O₃)₂ einer Blindprobe aus Wasser gegenüber.
- Figur 4:: Stellt die Adsorption von Ammoniak (NH₃) (30 µl, 1:5 verdünnte 30%ige Ammoniak-Lösung, 1 ml Adsorbens) am Wirkstoffkomplex [Zn(C₁₈H₃₃O₃)₂]-OOC-COO⁻ in einem flüssigen System bei pH 7-8, eingestellt mit NaOH, mit Ri = (C₁₈H₃₃O₃)₂ gegenüber einer Blindprobe aus Wasser, dar.
- Figur 5:: Stellt die Adsorption von Schwefelwasserstoff (H₂S) (1 ml Adsorbens, 1 ml, 1:100 verdünnte, gesättigte Natriumsulfitlösung, 100 µl 99 % Essigsäure) am Wirkstoffkomplex CH₃-(CH₂)₇-(-OCH₂CH₂)₈-COO-[Zn(C₁₈H₃₃O₃)₂] in einem flüssigen System bei pH 4 mit Ri = (C₁₈H₃₃O₃)₂ gegenüber einer Blindprobe mit Ethercarbonsäure CH₃-(CH₂)₇-(OCH2CH₂)₈-COOH dar.
- Figur 6:: Stellt die Adsorption von Schwefelwasserstoff (H₂S) (5 ml Adsorbens getrocknet bei 80 °C, 1 ml, 1:100 verdünnte, gesättigte Natriumsulfidlösung, 100µl (99%)) am Wirkstoffkomplex CH₃-(CH₂)₇-(OCH₂CH₂)₈-COO-[Zn(C₁₈H₃₃O₃)₂] als Feststoff mit Ri = (C₁₈H₃₃O₃)₂ gegenüber einer Blindprobe aus Zinksulfat dar.

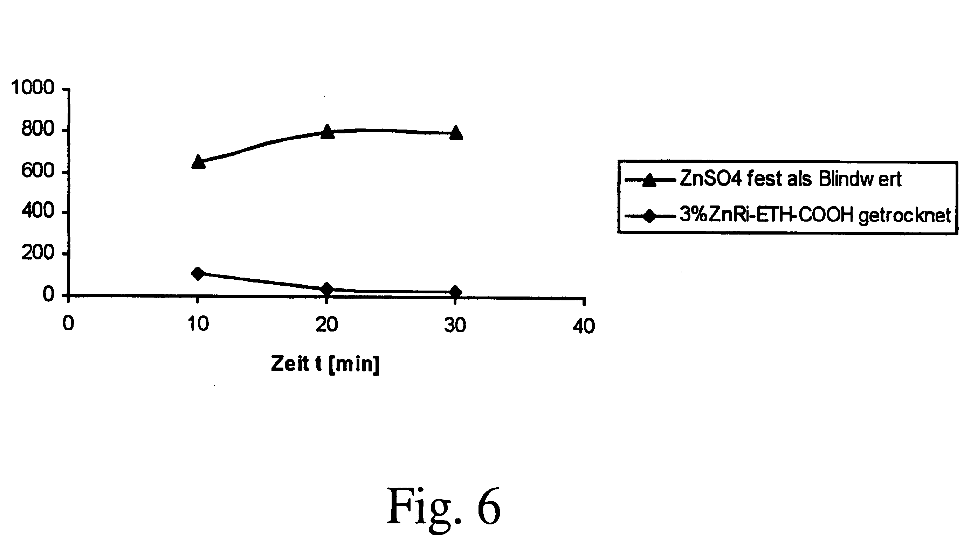

Die Ethercarbonsäure ist in der Figur 6 als ETH-COOH = CH₃-(CH₂)₇-(OCH₂CH₂)₈-COOH abgekürzt.

## Patentansprüche

1. Komplexiertes Metallsalz zur chemischen Bindung von Schadstoffen und/oder geruchsbildenden Substanzen mit Elektronendonoreigenschaften,
wobei das komplexierte Metallsalz der allgemeinen Formel I
[[Lₙ^{m-}(Me^{P+})]-Sₓ^{k-}]• zA^{Y+} (I)
entspricht
- mit Me als Metall, wobei Me = Zink;
- mit p = 1, 2, 3, 4, 5 oder 6, wobei p der Oxidationszahl von Me entspricht;
- mit L als Ligand, wobei L gleich oder unterschiedlich ist, mit 1 ≤ n ≤ 20, wobei der Ligand L abgeleitet aus einem Molekül der allgemeinen Formel II
B(R¹-D)ₗ (II)
ist
• mit einer funktionellen Gruppe D = -COOH und/oder ein daraus abgeleitetes Anion oder Salz, wobei m in der Formel I der Ladungszahl der funktionellen Gruppe D als Anion oder im Salz mit m = 1, 2, 3 oder 4 und l = 1 oder 2 entspricht, und
• wobei R¹ einem mit B funktionalisierten organischen Rest entspricht mit R¹ = substituierte lineare, verzweigte und/oder cyclische Alkyl-, Alkenyl-, Alkylaryl-, Arylalkyl-, Alkenylaryl-Gruppe mit 1 bis 40 C-Atomen, wobei R¹ mindestens eine Gruppe B aufweist, und
• mit B = OH, SO₃⁻, SO₃H, SO₄⁻, -OSO₃H, -COOH, -PO₃⁻, PO₃H, PO₄⁻, PO₄H, -O-(Alkyl-O-)ₐ-Alkyl-OH mit 1 ≤ a ≤ 200 und Alkyl = Methyl-, Ethyl oder Propylgruppe, -SH, -SR, NO₂, NO₃, -NH₂, -NHR², -NR²₂, -NH₃⁺, -NH₂R²⁽⁺⁾, -NHR²₂⁽⁺⁾, -F, -Cl, -I, -Br, Glykol, Glycerin, Polyglykol und/oder Polyglycerin und/oder daraus abgeleitete Anionen oder Salze, wobei R² gleich oder unterschiedlich ist und einer linearen, verzweigten und/oder cyclischen Alkyl-, Alkenyl-, Alkylaryl-Gruppe mit 1 bis 40 C-Atomen entspricht;
- mit mindestens einem Komplexbildner S, wobei S ausgewählt ist aus der Gruppe der wasserlöslichen Säuren, Anionen und/oder Salze der Bi-, Tri-, Polycarbonsäuren, Bi-, Tri-, Polyphosphonsäuren, Bi-, Tri-, Polysulfonsäuren, Bi-, Tri-, Polysulfate, Di-, Tri-, Polyphosphate, Polyethercarbonsäuren und/oder gemischtfunktionellen Verbindungen dieser Säuren, Anionen und/oder Salze mit x = 1, 2, 3 oder 4 und wobei k der Ladungszahl des Anions von S entspricht mit 1 ≤ k ≤ 20;
- wobei A gleich oder verschieden ist und einem Wasserstoffproton, einem organischen Kation und/oder einem Metallkation entspricht, insbesondere ein Erdalkali- oder Alkalimetallkation ist, mit z = 1, 2, 3 oder 4 und wobei y der Ladungszahl von A entspricht mit y = 1 oder 2, insbesondere wobei der Betrag von x • k = z • y ist,
wobei das komplexierte Metallsalz wasserlöslich ist.

2. Komplexiertes Metallsalz nach nach Anspruch 1, **dadurch gekennzeichnet,**
**daß** es in wäßriger Lösung grenzflächenaktiv ist und/oder
**daß** es als Feststoff vorliegt und/oder
**daß** es als Feststoff vorliegt und aus organischen Lösemitteln oder der Gasphase Schadstoffe und/oder geruchsbildende Substanzen, insbesondere mit Elektronendonoreigenschaften, chemisch bindet.

3. Verfahren zur Herstellung eines komplexierten Metallsalzes nach einem der Ansprüche 1 oder 2, **dadurch gekennzeichnet, daß** ein Metallsalz der allgemeinen Formel III
[Lₙ^{m-}(Me^{P+})] (III)
- mit Me = Zink und mit p = 1, 2, 3, 4, 5 oder 6, wobei p der Oxidationszahl von Me entspricht;
- mit L als Ligand, wobei L gleich oder unterschiedlich ist, mit 1 ≤ n ≤ 20, wobei der Ligand L abgeleitet aus einem Molekül der allgemeinen Formel II
B(R¹-D)ₗ (II)
ist
• mit einer funktionellen Gruppe D = -COOH und/oder daraus abgeleitetes Anion oder Salz, wobei m in der Formel III der Ladungszahl der funktionellen Gruppe D als Anion oder im Salz entspricht mit m = 1, 2, 3 oder 4 und l = 1 oder 2,
• wobei R¹ einem mit B funktionalisierten organischen Rest entspricht mit R¹ = substituierte lineare, verzweigte und/oder cyclische Alkyl-, Alkenyl-, Alkylaryl-, Arylalkyl-, Alkenylaryl-Gruppe mit 1 bis 40 C-Atomen, wobei R¹ mindestens eine Gruppe B, insbesondere an einem primären, sekundären und/oder tertiären C-Atom, aufweist,
• mit B = OH, SO₃⁻, SO₃H, SO₄⁻, -O-SO₃H, -COOH, -PO₃⁻ , PO₃H, PO₄⁻, PO₄H, -O-(Alkyl-O-)ₐ-Alkyl-OH mit 1 ≤ a ≤ 200 und mit Alkyl = Methyl-, Ethyl oder Propylgruppe, -SH, -SR, NO₂, NO₃, -NH₂, -NHR², -NR²₂, -NH₃⁺, -NH₂R²⁽⁺⁾, -NHR²₂⁽⁺⁾, -F, -Cl, -I, -Br, Glykol, Glycerin, Polyglykol und/oder Polyglycerin und/oder daraus abgeleitete Anionen oder Salze, wobei R² gleich oder unterschiedlich ist und einer linearen, verzweigten und/oder cyclischen Alkyl-, Alkenyl-, Alkylaryl-Gruppe mit 1 bis 40 C-Atomen entspricht,
mit mindestens einem Komplexbildner S, wobei S ausgewählt ist aus der Gruppe der wasserlöslichen Säuren, Anionen und/oder Salze der Bi-, Tri-, Polycarbonsäuren, Bi-, Tri-, Polyphosphonsäuren, Bi-, Tri-, Polysulfonsäuren, Bi-, Tri-, Polysulfate, Di-, Tri-, Polyphosphate, Polyethercarbonsäuren und/oder gemischtfunktionellen Verbindungen der Säuren und/oder Salze,
in Gegenwart von Wasser gegebenenfalls in Gegenwart einer Base umgesetzt wird, so dass das in Wasser gelöste komplexierte Metallsalz der allgemeinen Formel I gewonnen wird.

4. Verfahren nach Anspruch 3, **dadurch gekennzeichnet,**
**daß** die Umsetzung in Gegenwart von Wasser bei einer Temperatur zwischen 0 °C und 100°C erfolgt und/oder
**daß** als Base ein Alkalihydroxid, Erdalkalihydroxid und/oder eine organische Base zugesetzt wird.

5. Zusammensetzung, insbesondere wäßrige Zusammensetzung, enthaltend ein komplexiertes Metallsalz nach einem der Ansprüche 1 oder 2 sowie gegebenenfalls Wasser und/oder gegebenenfalls weitere Hilfsstoffe, Lösungsmittel und/oder Wirkstoffe.

6. Verwendung des komplexierten Metallsalzes nach einem der Ansprüche 1 oder 2 oder einer Zusammensetzung nach Anspruch 5 zur chemischen Bindung, insbesondere Adsorption, von Schadstoffen und/oder geruchsbildenden Substanzen.

7. Verwendung des komplexierten Metallsalzes nach einem der Ansprüche 1 oder 2 oder einer Zusammensetzung nach Anspruch 5 zur Behandlung und/oder Modifizierung von Substraten oder Oberflächen von Substraten.

## Claims

1. A complex metallic salt for chemically binding contaminants and/or odor forming substances having electron donor characteristics,
wherein the complex metallic salt of the general formula I corresponds to
[[Lₙ^{m-}(Me^{p+})]-Sₓ^{k}]·zA^{y+} (I)
- wherein Me is the metal, wherein Me = zinc;
- wherein p = 1, 2, 3, 4, 5, or 6, wherein p corresponds to the oxidation amount of Me;
- wherein L is the ligand, wherein L is equal or different, with 1 ≤ n ≤ 20, wherein the ligand L is derived from a molecule of the general formula II
**B(R¹-D)_{I}** **(II)**
• having a functional group D = /COOH, and/or an anion or salt derived from the same, wherein in formula I, m corresponds to the loading amount of the functional group as an anion, or in the salt corresponds with m = 1, 2, 3, or 4, and I = 1 or 2, and
• wherein R¹ corresponds to a B functionalized organic moiety, wherein R¹ = a substituted, linear, branched, and/or cyclic alkyl, alkenyl, alkyl aryl, aryl alkyl, alkenyl aryl group with 1 to 40 C atoms, wherein R¹ has at least one group B, and
• wherein B = OH, SO₃⁻, SO₃H, SO₄⁻, -OSO₃H, -COOH, -P0₃⁻, PO₄⁻, PO₄H, -O-(alkyl-O-)ₐ-alkyl-OH, wherein 1 ≤ a ≤ 200, and alkyl = a methyl, ethyl, or propyl group, -SH, -SR, NO₂, NO₃, -NH₂, -NHR², - NR²₂, -NH₃⁺, -NH₂R²⁽⁺⁾, -NHR²₂⁽⁺⁾, -F, -Cl, -I, -Br, glycol, glycerin, polyglycol, and/or polyglycerin, and/or anions or salts derived therefrom, wherein R² is equal or different, and corresponds to a linear, branched, and/or cyclic alkyl, Alkenyl, alkyl aryl group with 1 to 40 C atoms;
- having at least one chelating agent S, wherein S is selected from the group consisting of water-soluble acids, anions, and/or the salts of bi, tri, polycarboxylic acids, bi, tri, polyphosphonic acids, bi, tri, polysulfonic acids, bi, tri, polysulfates, di, tri, polyphosphates, polyether carboxylic acids, and/or mixed-functional compounds of these acids, anions, and/or salts, wherein x = 1, 2, 3, or 4, and wherein k corresponds to the loading amount of the anion of S, wherein 1 ≤ k ≤ 20<
- wherein A is equal or different, and corresponds to a hydrogen proton, an organic cation, and/or a metallic cation, in particular an earth alkali, or alkali metal cation, wherein z = 1, 2, 3, or 4, and wherein y corresponds to the charging amount of A, wherein y = 1 or 2, in particular, wherein the amount of x•k=z•y,
wherein the complex metallic salt is water-soluble.

2. The complex metallic salt according to claim 1, **characterized in that**
the same is surface active in aqueous solution, and/or
the same is present as a solid, and/or
the same is present as a solid, and chemically binds contaminants, and/or odor forming substances, in particular those having electron donor characteristics, from organic solvents, or form the gas phase.

3. A method for the production of a complex metallic salt according to one of the claims 1 or 2, **characterized in that** a metallic salt of the general formula II
**[Lₙ^{m-}(Me^{P+})]** **(III)**
- corresponds to Me = zinc, and p = 1, 2, 3, 4, 5, or 6, wherein p corresponds to the oxidation amount of Me<
- wherein L is a ligand, wherein L is equal or different, wherein 1 ≤ n ≤ 20, wherein the ligand L is derived from a molecule of the general formula II
**B(R¹-D)_{I}** **(II)**
• has a functional group D - -COOH, and/or an anion or salt derived from the same, wherein m in the formula II of the charging amount of the functional group D, as the anion, or in the salt, corresponds to m = 1, 2, 3, or 4, and I = 1 or 2,
• wherein R¹ corresponds to an organic moiety functionalized with B with R¹ = a substituted, linear, branched, and/or cyclic alkyl, Alkenyl, alkyl aryl, aryl alkyl, alkenyl aryl group with 1 to 40 C-atoms, wherein R¹ has at least one group B, in particular at a primary, secondary, and/or tertiary C-atom,
• wherein B = OH, SO₃⁻, SO₃H, SO₄⁻, -O-SO₃H, -COOH, -PO₃⁻, PO₃H, PO₄⁻, PO₄H, -O- (alkyl-O-)ₐ-alkyl-OH with 1 ≤ a ≤ 200, and with alkyl = a methyl, ethyl, or propyl group, -SH, -SR, NO₂, NO₃, - NH₂, -NHR²₂, -HH₃⁺, -NH₂R²⁽⁺⁾, -NHR²₂⁽⁺⁾, -F, -CI, -I, -Br, glycol, glycerin, polyglycol, and/or polyglycerin, and/or anions or salts derived therefrom, wherein R² is equal or different, and corresponds to a linear, branched, and/or cyclic alkyl, Alkenyl, alkyl aryl group with 1 to 40 C-atoms,
Having at least one chelating agent S, wherein S is selected from the group of water-soluble acids, anions, and/or salts of the bi, tri, polycarboxylic acids, bi, tri, polyphosphonic acids, bi, tri, polysulfonic acids, bi, tri, polysulfate, di, tri, polyphosphate, polyether carboxylic acids, and/or mixed-functional compounds of these acids and/or salts,
is being converted in the presence of water, optionally in the presence of a base, such that the complex metallic salt of the general formula I being dissolved in water is obtained.

4. The method according to claim 3, **characterized in that**
the conversion occurs in the presence of water at a temperature between 0°C and 100°C, and/or
as a base an alkali hydroxide, earth alkali hydroxide, and/or an organic base are added.

5. A composition, in particular an aqueous composition, containing a complex metallic salt according to one of the claims 1 or 2, as well as optionally water, and/or optionally additional auxiliaries, solvents, and/or active ingredients.

6. A use of the complex metallic salt according to one of the claims 1 or 2, or a composition according to claim 5 for chemical binding, in particular, adsorption, of contaminants and/or odor causing substances.

7. The use of the complex metallic salt according to one of the claims 1 or 2, or a composition according to claim 5, for the treatment and/or modification of substrates, or the surfaces of substrates.

## Revendications

1. Sel métallique complexé pour la liaison chimique de polluants et/ou de substances génératrices d'odeurs avec des propriétés de donneuses d'électrons,
le sel métallique complexé correspondant à la formule générale I
[[Ln^{m-}(Me^{P+})]-Sₓ^{k-}]• zA^{Y+} (1)
- avec Me comme métal, sachant que Me = zinc ;
- avec p = 1, 2, 3, 4, 5 ou 6, p correspondant au nombre d'oxydation de Me;
- avec L comme ligand, les L étant identiques ou différents, avec 1 ≤ n ≤ 20, le ligands L étant dérivé d'une molécule de la formule générale II
B(R¹-D)ₗ (II)
• avec un groupe fonctionnel D = -COOH et/ou un anion ou un sel dérivé de celui-ci, m correspondant dans la formule I au nombre de charges du groupe fonctionnel D comme anion ou dans le sel avec m = 1, 2, 3 ou 4 et 1 = 1 ou 2, et
• R¹ correspondant à un radical organique fonctionnalisé avec B avec R¹ = un groupe alkyle, alcénye, alkylaryle, arylalkyle, alcénylaryle substitué linéaire, ramifié et/ou cyclique avec 1 à 40 atomes de C, R¹ comportant au moins un groupe B, et
• avec B = OH, SO₃⁻, SO₃H, SO₄⁻, -OSO₃H, -COOH, PO₃⁻, PO₃H, PO₄⁻, PO₄H, -O-(alkyle-O-)ₐ-alkyle-OH avec 1 ≤ a ≤ 200 et alkyle = groupe méthyle, éthyle ou propyle, -SH, -SR, NO₂, NO₃, -NH₂, -NHR², -NR²₂, -NH₃⁺, -NH2R²⁽⁺⁾, -NHR²₂⁽⁺⁾, -F, -CI, - I, -Br, glycol, glycérol, polyglycol et/ou polyglycérol et/ou des anions ou des sels qui en sont dérivés, les R² étant identiques ou différents et correspondant à un groupe alkyle, alcénylaryle, alkylaryle linéaire, ramifié et/ou cyclique avec 1 à 40 atomes de C ;
- avec au moins un complexant S, S étant choisi parmi le groupe des acides, des anions et/ou des sels solubles dans l'eau des acides bi-, tri-, polycarboxyliques, bi-, tri-, polyphosphoniques, bi-, tri-, polysulfoniques, des bi-, tri-, polysulfates, des bi-, tri-, polyphosphates, des acides polyéthercarboxyliques et/ou des composés fonctionnels mixtes de ces acides, anions et/ou sels, avec x = 1, 2, 3 ou 4 et k correspondant au nombre de charges de l'anion de S, avec 1 ≤ k ≤20;
- les A étant identiques ou différents et correspondant à un proton hydrogène, un cation organique et/ou un cation métallique, en particulier étant un cation de métal alcalinoterreux ou alcalin, avec z = 1, 2, 3 ou 4 et y correspondant au nombre de charges de A avec y = 1 ou 2, en particulier la valeur absolue de x•k étant égale à z•y,
le sel métallique complexé étant soluble dans l'eau.

2. Sel métallique complexé selon la revendication 1, **caractérisé en ce qu'**il est tensioactif en solution aqueuse et/ou
**en ce qu'**il se présente comme solide et/ou
**en ce qu'**il se présente comme solide et qu'il lie chimiquement depuis des solvants organiques ou la phase gazeuse des polluants et/ou des substances génératrices d'odeurs, en particulier avec des propriétés de donneur d'électrons.

3. Procédé de préparation d'un sel métallique complexé selon l'une quelconque des revendications 1 ou 2, **caractérisé en ce qu'**un sel métallique de la formule générale III
[Lₙ^{m-}(Me^{p+})] (III)
- avec Me = zinc et avec p = 1, 2, 3, 4, 5 ou 6, p correspondant au nombre d'oxydation de Me;
- avec L comme ligand, les L étant identiques ou différents, avec 1 ≤ n ≤ 20, le ligand L étant dérivé d'une molécule de la formule générale II
B(R¹-D)ₗ (II)
• avec un groupe fonctionnel D = -COOH et/ou un anion ou un sel qui en est dérivé, m correspondant dans la formule III au nombre de charges du groupe fonctionnel D comme anion ou dans le sel, avec m = 1, 2, 3 ou 4 et l = 1 ou 2,
• R¹ correspondant à un radical organique fonctionnalisé avec B, avec R¹ = un groupe alkyle, alcényle, alkylaryle, arylalkyle, alcénylaryle substitué linéaire, ramifié et/ou cyclique avec 1 à 40 atomes de C, R¹ comportant au moins un groupe B, en particulier sur un atome de C primaire, secondaire et/ou tertiaire,
• avec B = OH, SO₃⁻, SO₃H, SO₄⁻, -O-SO₃H, -COOH, -PO₃⁻, PO₃H, PO₄⁻ , PO₄H, -O-(alkyle-O-)ₐ-alkyle-OH avec 1 ≤ a ≤ 200 et avec alkyle = groupe méthyle, éthyle ou propyle, -SH, -SR, NO₂, NO₃, -NH₂, -NHR², -NR²₂, -NH₃⁺, -NH₂R²⁽⁺⁾, -NHR²₂⁽⁺⁾, -F, -Cl, -I,-Br, glycol, glycérol, polyglycol et/ou polyglycérol et/ou des anions ou des sels qui en sont dérivés, les R² étant identiques ou différents et correspondant à un groupe alkyle, alcényle, alkylaryle linéaire, ramifié et/ou cyclique avec 1 à 40 atomes de C,
est mis en réaction avec au moins un complexant S, S étant choisi parmi le groupe des acides, des anions et/ou des sels soluble dans l'eau des acides bi-, tri-, polycarboxyliques, des acides bi-, tri-, polyphosphoniques, des acides bi-, tri-, polysulfoniques, des bi-, tri-, polysulfates, des bi-, tri-, polyphosphates, des acides polyéthercarboxyliques et/ou des composés fonctionnels mixtes des acides et/ou des sels,
en présence d'eau, le cas échéant en présence d'une base, de telle sorte que le sel métallique complexé dissout dans l'eau de la formule générale I est obtenu.

4. Procédé selon la revendication 3, **caractérisé en ce que**
la réaction s'effectue en présence d'eau à une température comprise entre 0 °C et 100 °C et/ou
**en ce qu'**un hydroxyde alcalin, un hydroxyde alcalinoterreux et/ou une base organique sont ajoutés comme base.

5. Composition, en particulier composition aqueuse, contenant un sel métallique complexé selon l'une quelconque des revendications 1 ou 2 ainsi que le cas échéant de l'eau et/ou le cas échéant d'autres substances auxiliaires, des solvants et/ou des principes actifs.

6. Utilisation du sel métallique complexé selon l'une quelconque des revendications 1 ou 2 ou une composition selon la revendication 5 pour la liaison chimique, en particulier l'adsorption, de polluants et/ou de substances génératrices d'odeurs.

7. Utilisation du sel métallique complexé selon l'une quelconque des revendications 1 ou 2 ou d'une composition selon la revendication 5 pour le traitement et/ou la modification de substrats ou de surfaces de substrats.
